# DEMANDE DE BREVET EUROPEEN

(11) **EP 0 618 391 A2**
(43) Date de publication de la demande: **05.10.1994**
(21) Numéro de dépôt: 94400604.8
(22) Date de dépôt: 21.03.1994
(51) Int. Cl.: F16L 11/04

(54) **Conduite de fluide à base de matière(s) plastique(s)**

(30) Priorité: 29.03.1993 FR 9303577
(71) Demandeur: HUTCHINSON, F-75008 Paris (FR)
(72) Inventeur: Le Devehat, Christian, F-45200 Amilly (FR); Nicolas, Olivier, F-45200 Montargis (FR)
(74) Mandataire: Orès, Bernard

(57) **Abrégé**

Conduite de fluide à base de matière(s) thermoplastique(s) simples ou complexes, notamment de matières thermoplastiques élastomères (TPE) comprenant, le cas échéant, des parties de formes, rigidités et caractéristiques mécaniques différentes entre ses extrémités.

Elle est constituée, sur pratiquement toute sa longueur, en au moins deux couches (22,21) de matériaux à propriétés différentes et dont l'une est choisie en fonction de ses caractéristiques de résistance à l'agression du fluide transporté, d'une part, et pour son imperméabilité audit fluide, d'autre part.

## Description

L'invention concerne une conduite de fluide à base de matière(s) plastique(s).

Elle vise en particulier, mais sans y être limitée, les conduites, raccords, tubes, tuyaux, tubulures et canalisations à base de matière(s) plastique(s) propres à être utilisés dans l'industrie des engins de locomotion et, notamment, l'industrie automobile, par exemple dans le compartiment moteur de véhicules à moteurs thermiques mais aussi en tant que tubes évents de réservoirs de carburant ou encore en tant qu'organes de circuits de refroidissement de moteurs ou de circuits de climatisation d'habitacles d'automobile ou d'engins de locomotion autres que des automobiles.

Les conduites de fluides, en particulier celles qui sont associées aux moteurs thermiques d'automobiles, par exemple pour l'acheminement d'air entre la prise d'air et le filtre à air, puis entre ce dernier et le moteur ou pour l'acheminement d'un liquide caloporteur de refroidissement du moteur, comme un mélange eau/éthylène-glycol usuel ou un mélange plus spécifique à deux phases, -du type de ceux mis en oeuvre dans les systèmes de refroidissement diphasiques-, sont réalisées depuis de nombreuses années en matériaux élastomères (EPDM, NBR, caoutchouc épichlorhydrine ou caoutchouc silicone pour des applications dans des zones à température élevée du compartiment moteur) . Ces matériaux élastomères sont également mis en oeuvre pour la fabrication de canalisations, tubes, tuyaux, raccords, conduites ou tubulures prévus pour l'acheminement d'autres fluides, par exemple le carburant des moteurs thermiques ou des mélanges d'air et de vapeurs de carburant, comme dans les tubes évents des réservoirs d'automobile, ou encore des liquides de graissage, de transmission et analogues. Si les dispositifs connus, réalisés à partir de ces matériaux donnent satisfaction, ils peuvent cependant être de fabrication difficile, notamment lorsque leur forme géométrique est complexe, d'une part et sont, d'autre part, généralement d'un poids relativement élevé.

Etant donné que les constructeurs d'automobiles cherchent à réduire, autant que faire se peut, le poids des constituants ou composants d'un véhicule et que, pour des raisons d'encombrement et de performance, l'espace disponible sous le capot moteur est réduit, les formes exigées pour les conduites d'acheminement de fluides, notamment au voisinage du moteur, mais aussi dans l'habitacle ou au niveau du réservoir de carburant, sont de plus en plus compliquées dans leur dessin, mais parfois aussi dans leur structure dans la mesure où l'on souhaite qu'une même canalisation ait, entre ses extrémités, des propriétés différentes, -par exemple de souplesse dans une direction et de rigidité dans une autre-, mais aussi des possibilités de déformation plus marquées localement, par exemple pour épouser un volume donné, ou encore présenter des propriétés différentes d'absorption et de transmission des vibrations.

C'est pourquoi on a proposé de remplacer ces dispositifs à base d'élastomère(s) par des dispositifs à base de matière(s) thermoplastique(s), simple(s) ou complexe(s) et, en particulier, des matières thermoplastiques élastomères (TPE) lesquelles peuvent être mises en forme par les techniques de transformation des matières plastiques tout en présentant les caractéristiques des élastomères. Ces matériaux mono- ou polyphasés (en tant qu'alliages élastomèriques) ont ainsi été proposés pour la fabrication des conduits d'air propre de moteurs d'automobiles soit sous forme de tubes en un seul matériau et à partie(s) rigide(s) associée(s) à des parties déformables, comme des soufflets, soit sous forme de tubes multicouches, totalement rigides ou avec des parties déformables, comme décrit, par exemple, dans EP-A1-0 492 129. Les dispositifs décrits dans ce document et dont l'axe central peut être courbé dans deux ou trois dimensions de l'espace, -ils sont alors désignés sous les noms de dispositifs "2D" ou "3D"-, sont constitués par un corps creux en une première matière plastique, de préférence réalisée par extrusion-soufflage, des organes d'espacement à la périphérie du corps creux réalisés en une seconde matière plastique et une couche externe sur la totalité du corps creux, à l'exception des zones où règnent les organes d'espacement.

Si ces dispositifs présentent déjà, par rapport aux dispositifs usuels à base de matériaux élastomères, des avantages de légèreté, de résistance à la température, de durée de vie, ils ne sont pas prévus pour permettre le transport de fluides agressifs, dont la température peut être élevée (de l'ordre de 120-140°C), d'une part, tout en garantissant une bonne étanchéité à l'égard du fluide transporté, d'autre part.

C'est, par conséquent, un but général de l'invention de fournir une conduite de fluide perfectionnée à base de matière(s) plastique(s) qui présente les avantages des dispositifs en ces matières, notamment ceux reconnus aux TPE et qui, complémentairement, puisse être utilisée de manière sûre pour le transport de fluide agressif à relativement haute température et à l'égard duquel elle soit imperméable.

C'est, aussi, un but de l'invention de fournir une telle conduite dont l'application soit versatile, en fonction des *desiderata* de la pratique, et dont les multiples formes et dimensions en lesquelles elle peut être réalisée la rende apte à des utilisations aussi variées que celles de tubes évents de réservoirs de carburant, de tubulures d'acheminement de ce dernier ou encore de parties constitutives d'un circuit de refroidissement d'un moteur thermique à l'aide des mélanges usuels liquides du type eau/éthylène-glycol ou des mélanges du type eau-vapeur comme ceux mis en oeuvre dans les systèmes de refroidissement diphasique.

C'est, à cet égard, un but de l'invention de fournir une telle conduite de forme complexe, susceptible de présenter diverses caractéristiques mécaniques en différents points de sa longueur avec, le cas échéant, des parties rigides et des parties souples, comme des soufflets ou, le long d'une même conduite et disposées séquentiellement les unes à côté des autres, des parties rigides et des parties déformables qui ne soient pas des soufflets, lesdites parties formant une seule pièce monobloc sans solution de continuité entre elles.

C'est, également, un but de l'invention de fournir une telle conduite qui présente une bonne résistance à une éventuelle mise en dépression et qui, en outre, dans certaines applications, permette un bon amortissement des vibrations.

C'est, encore, un but de l'invention de fournir une telle conduite qui satisfasse aux exigences de protection de l'environnement dans la mesure où elle peut être recyclée.

C'est, enfin, un but de l'invention de fournir une telle conduite qui peut être fabriquée par les techniques du type de celles évoquées ci-dessus d'extrusion-soufflage ou d'extrusion-aspiration, dans des formes spatiales complexes et à un coût d'exploitation économiquement intéressant.

Une conduite à base de matière(s) thermoplastique(s) simples ou complexes, notamment de matières thermoplastiques élastomères (TPE) comprenant, le cas échéant, des parties de formes, rigidités et caractéristiques mécaniques différentes entre ses extrémités est caractérisée, selon l'invention, en ce qu'elle est constituée sur pratiquement toute sa longueur en au moins deux couches de matériaux à propriétés différentes et dont l'une est choisie en fonction de ses caractéristiques de résistance à l'agression du fluide transporté, d'une part, et pour son imperméabilité audit fluide, d'autre part.

Les matières plastiques et/ou les matières thermoplastiques élastomères (TPE) que l'invention envisage de mettre en oeuvre pour la réalisation des conduites de fluides perfectionnées qu'elle propose sont avantageusement choisies parmi les polyamides 6, les polyamides 6.6, les polyamides 11 ou 12, les polyamides 4.6 ou 6.10 ou 6.12, les alliages élastomériques de polyamides, le polypropylène, le polyéthylène, les polyphénylènesulfides (PPS), les polybutylènetéréphtalates (PBT), les polyéthylènetéréphtalates (PET), les polyéthersulfones (PES), les polyétheréthercétones (PEEK), les polyimides, les polyamideimides, les polyéthers bloc amides (PEBA), les polyétheresters (TEEE), etc ..., ces matériaux étant, le cas échéant, chargés, par exemple à l'aide de fibres de verre.

Selon une autre caractéristique de l'invention, la couche choisie pour ses caractéristiques de résistance à l'agression du fluide transporté et pour son imperméabilité audit fluide est une couche interne de la conduite choisie parmi les polymères oléfiniques, polyéthylènes ou polypropylènes.

Dans une forme de réalisation de l'invention, et pour une conduite de fluide plus particulièrement destinée à entrer dans la constitution d'un circuit de refroidissement de moteur thermique, la couche à bonnes caractéristiques de résistance à l'agression et à bonnes caractéristiques d'imperméabilité au fluide transporté est en polymère fluoré.

Dans un mode d'exécution particulièrement avantageux, ledit polymère fluoré est du polyfluorure de vinylidène.

Le polymère fluoré, avantageusement du polyfluorure de vinylidène, forme de préférence la couche la plus interne de la conduite.

En variante, il forme une couche intermédiaire entre une couche externe de la conduite et une couche interne de cette dernière.

Le polyflurorure de vinylidène, dont la température de fusion est de l'ordre de 170-175°C, peut être aisément mis en oeuvre par les techniques d'extrusion-soufflage ou d'extrusion-aspiration. Ses caractéristiques d'imperméabilité à l'eau, d'une part et, d'autre part, de bonne tenue en température dans une plage comprise entre -45° et 150°C en font un matériau particulièrement bien approprié pour résister à des liquides agressifs comme ceux des circuits de refroidissement usuels à mélange d'eau/éthylène-glycol ou ceux mis en oeuvre dans les systèmes de refroidissement diphasique.

L'invention prévoit que les matériaux constitutifs des couches de la conduite de fluide soient réunis entre eux sans couche de liaison intermédiaire, lorsqu'ils sont physiquement et chimiquement compatibles.

En variante, une ou des couche(s) intermédiaire(s) assure(nt) la liaison des couches interne, externe et, le cas échéant, d'autres couches de la conduite.

Selon une autre des ses caractéristiques, l'invention propose de réaliser les conduites telles que définies ci-dessus par les techniques d'extrusion-soufflage ou d'extrusion-aspiration.

Les conduites de fluides selon l'invention ont avantageusement un diamètre compris entre 10 et 80 mm, une épaisseur comprise entre 0,5 et 5 mm et peuvent atteindre une longueur développée sous pression de l'ordre de 2 m environ, y compris lorsque leur axe moyen est courbé dans les deux (2D) ou trois dimensions de l'espace (3D) avec un nombre de coudes qui peut être de l'ordre de six.

L'invention vise aussi l'utilisation d'une conduite de fluide telle que définie ci-dessus en tant que canalisation, tube, tuyau, raccord ou tubulure d'acheminement de fluide agressif, comme le liquide caloporteur de refroidissement d'un moteur thermique, le carburant d'un tel moteur, les mélanges air/vapeurs de carburant, etc ...

L'invention sera bien comprise par la description qui suit, faite à titre d'exemple et en référence au dessin annexé dans lequel :
- la figure 1 est une vue en perspective d'une conduite selon l'invention ;
- la figure 2 est une vue de la conduite selon la figure 1 mais sous une autre représentation perspective ;
- les figures 3 à 5 sont des vues en coupe selon les lignes 3-3, 4-4 et 5-5 de la figure 2 ;
- les figure 3A, 4A, 5A sont des vues analogues aux figures 3 à 5 mais pour une autre forme de réalisation.

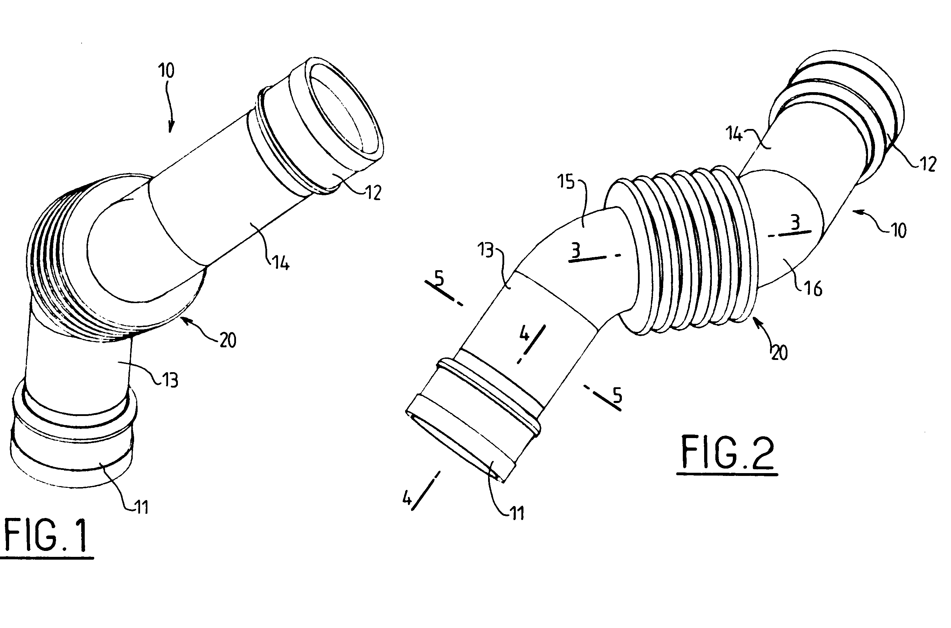

Une conduite de fluide selon l'invention, 10, est montrée schématiquement sur les figures 1 et 2 en tant que canalisation de transport de fluide liquide ou gazeux, comme un liquide de refroidissement de moteur thermique ou un mélange d'air et de vapeurs de carburant d'un tel moteur. Elle comprend entre deux embouts d'extrémités 11 et 12 des tronçons ou parties rectilignes souples ou rigides, 13 et 14 adjacents aux embouts et des parties incurvées 15 et 16 (elles aussi souples ou rigides) interposées entre les parties 13 et 14 et un soufflet 20 lequel confère à la conduite une possibilité de déformation relativement importante. L'axe moyen de la conduite 10 est courbé dans les trois dimensions de l'espace (3D) et est réalisé à base de matière(s) plastique(s) en particulier à partir de thermoplastiques élastomères (TPE) simples ou sous forme d'alliages élastomériques.

Les matériaux préférés pour sa réalisation sont avantageusement choisis parmi les polyamides 6, les polyamides 6.6, les polyamides 11 ou 12, les polyamides 4.6 ou 6.10 ou 6.12, les alliages élastomériques de polyamides, le polypropylène, le polyéthylène, les polyphénylènesulfides (PPS), les polybutylènetéréphtalates (PBT), les polyéthylènetéréphtalates (PET), les polyethersulfones (PES), les polyétheréthercétone (PEEK), les polyimides, les polyamideimides, les polyéthers bloc amides (PEBA), les polyétheresters (TEEE), etc ..., ces matériaux étant, le cas échéant, chargés, par exemple à l'aide de fibres de verre.

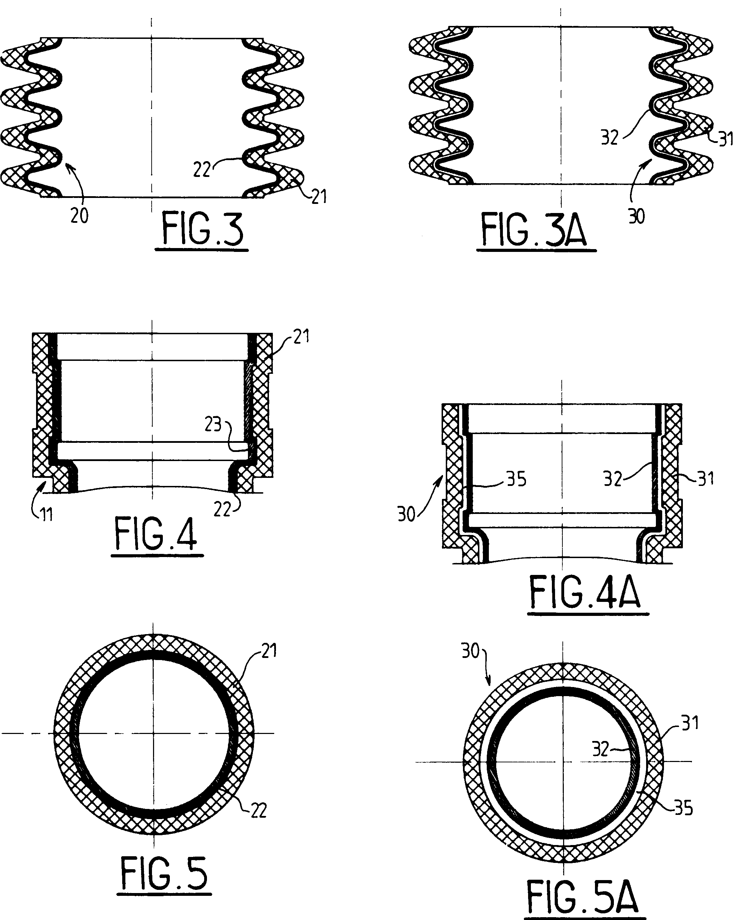

Selon l'invention, et comme bien montré sur les figures 3 à 5, la conduite 10 est constituée sur pratiquement toute sa longueur, et notamment au droit du soufflet 20, figure 3, en au moins deux couches de matériaux à propriétés différentes, à savoir une couche externe 21 et une couche interne 22, cette dernière étant choisie en fonction de ses caractéristiques de résistance à l'agression du fluide transporté, d'une part et pour son imperméabilité audit fluide, d'autre part.

Dans une forme de réalisation, la couche externe 21 est en une matière thermoplastique élastomère, par exemple un alliage élastomèrique EPDM/polypropylène, du type de ceux vendus sous la dénomination "Santoprène" (une Marque déposée de la Société MONSANTO) et la couche interne 22 est, d'une façon générale, en un polymère oléfinique, polyéthylène ou polypropylène, les deux couches étant réunies entre elles sans couche de liaison intermédiaire.

L'invention envisage également de constituer la couche externe 21 d'une conduite donnée en des matériaux totalement différents par leur nature chimique ou, en variante, d'une même famille mais qui différent entre eux en ce qui concerne leurs caractéristiques mécaniques, notamment de dureté, par exemple en raison de l'adjonction de charges de sorte que ladite conduite présente entre ses deux extrémités et séquentiellement adjacentes les unes aux autres des parties de rigidité et/ou souplesse différentes, y compris en l'absence de soufflet.

La conduite peut être munie, en cas de besoin, de parties en saillie externe, avec ou sans insert, et les embouts peuvent être à même section droite, par exemple circulaire ou, en variante, présenter des contours différents, par exemple l'un être circulaire et l'autre rectangulaire.

En donnant à la couche interne 22 un bon état de surface et un dessin approprié, les embouts 11 et 12 peuvent être conformés pour ménager une gorge 23 de logement d'un joint, par exemple un joint O-ring.

Dans la réalisation montrée schématiquement sur les figures 3A à 5A, la conduite 30 est de même configuration que celle montrée sur les figures 1 et 2, c'est-à-dire munie à ses extrémités d'embouts comme 11 et 12 (figure 4A), d'un soufflet analogue au soufflet 20 (figure 3A) et de parties rectilignes ou courbes, l'axe moyen de la conduite 30 étant courbé dans les trois directions de l'espace (3D) . Dans cette forme de réalisation la conduite comprend également une couche externe 31 et une couche interne 32, s'étendant sur toute ou sensiblement toute la longueur de la conduite, y compris au droit du soufflet, les couches 31 et 32 étant, toutefois, dans cette réalisation réunies entre elles par une couche de liaison 35.

La couche externe 31 peut être à base de polyamide et la couche interne 32 à base de polyéthylène.

Dans une autre réalisation, la couche externe 31 est à base de polyamide et la couche interne 32 à base de polypropylène.

Comme dans les modes de réalisations décrits ci-dessus en référence aux figures 1 à 5, la couche externe 31 d'une conduite donnée peut être en des matériaux totalement différents ou en des matériaux d'une même famille mais de caractéristiques mécaniques différentes, par exemple en polyamide rigide et polyamide souple, de sorte que ladite conduite peut être constituée par une séqence de parties déformables et/ou non déformables.

Dans une réalisation d'une conduite de fluide plus particulièrement destinée à entrer dans la constitution d'un circuit de refroidissement de moteur thermique, la couche interne 32 est en polymère fluoré et, dans un mode d'exécution particulièrement avantageux, en polyfluorure de vinylidène tandis que la couche externe 31 est en une matière thermoplastique élastomère (polypropylène/EPDM) par exemple en une matière du type de celles commercialisées sous le nom "Santoprène" (une Marque déposée de la Société MONSANTO).

Dans une variante, non représentée, la couche 32 qui est celle présentant de bonnes caractéristiques de résistance à l'agression du fluide transporté et d'imperméabilité audit fluide ne forme pas la couche la plus interne de la conduite mais est garnie, sur sa face interne la plus proche de l'axe A, d'une couche supplémentaire ou auxiliaire.

Que la conduite de fluide soit du type de celle montrée sur les figures 1 à 5 ou, plus schématiquement, sur les figures 3A à 5A, l'invention prévoit de la réaliser par les techniques d'extrusion-soufflage ou d'extrusion-aspiration, lesquelles permettent d'obtenir des formes complexes, dans les trois dimensions de l'espace, d'une part et, d'autre part, une conduite monobloc, sans solution de continuité entre ses différentes parties constitutives, rigides ou souples, -comme les soufflets 20, 30,- ou des parties qui ne soit pas sous forme de soufflet mais qui soit cependant déformables.

La mise en oeuvre de ces techniques, dans lesquelles une paraison est d'abord extrudée puis est appliquée par soufflage sur la paroi d'un moule, ou est aspirée sur ladite paroi, permet un gain de matière, évite les chutes au niveau du plan de joint, assure une parfaite continuité du revêtement interne sans ligne de joint, conduisant ainsi à des produits d'excellentes caractéristiques mécaniques, tant sur le plan de la rigidité que sur celui de la souplesse, de l'étanchéité, de l'imperméabilité, de la résistance à l'agression des fluides et de la résistance à la chaleur et, de ce fait, bien adaptés à de multiples applications requises dans l'industrie, en particulier celle de l'automobile comme, et sans qu'aucun caractère limitatif ne soit attaché à cette énumération, des tubes évents de réservoirs de carburant pour moteurs d'automobile, des tubulures d'acheminement dudit carburant, des raccords d'eau, des éléments de circuit de refroidissement de moteurs thermiques à circulation d'eau ou du type diphasique, etc ...

## Revendications

1. Conduite de fluide à base de matière(s) thermoplastique(s) simples ou complexes, notamment de matières thermoplastiques élastomères (TPE) comprenant, le cas échéant, des parties de formes, rigidités et caractéristiques mécaniques différentes entre ses extrémités, caractérisée en ce qu'elle est constituée sur pratiquement toute sa longueur en au moins deux couches (21, 22 ; 31, 32) de matériaux à propriétés différentes et dont l'une (22, 32) est choisie en fonction de ses caractéristiques de résistance à l'agression du fluide transporté, d'une part, et pour son imperméabilité audit fluide, d'autre part.

2. Conduite de fluide selon la revendication 1, caractérisée en ce qu'elle est réalisée en des matières plastiques et/ou des matières thermoplastiques élastomères (TPE) avantageusement choisies parmi les polyamides 6, les polyamides 6.6, les polyamides 11 ou 12, les polyamides 4.6 ou 6.10 ou 6.12, les alliages élastomériques de polyamides, le polypropylène, le polyéthylène, les polyphénylènesulfides (PPS), les polybutylènetéréphtalates (PBT), les polyéthylènetéréphtalates (PET), les polyéthersulfones (PES), les polyétheréthercétones (PEEK), les polyimides, les polyamideimides, les polyéthers bloc amides (PEBA), les polyétheresters (TEEE), etc ..., ces matériaux étant, le cas échéant, chargés, par exemple à l'aide de fibres de verre.

3. Conduite de fluide selon la revendication 1 ou la revendication 2, caractérisée en ce que ses couches constitutives (21, 22 ...) sont réunis entre elles sans couche de liaison intermédiaire.

4. Conduite de fluide selon la revendication 1 ou la revendication 2, caractérisée en ce qu'une ou des couche(s) intermédiaire(s) (35 ...) assure(nt) la liaison des couches interne (32), externe (31) et, le cas échéant, d'autres couches de la conduite.

5. Conduite de fluide selon l'une quelconque des revendications précédentes, caractérisée en ce que la couche choisie pour ses caractéristiques de résistance à l'agression du fluide transporté et pour son imperméabilité audit fluide est une couche interne (22, 32) choisie parmi les polymères oléfiniques, polyéthylènes, polypropylènes ou polymères fluorés.

6. Conduite de fluide selon la revendication 5, caractérisée en ce que le polymère fluoré est du polyfluorure de vinylidène.

7. Conduite de fluide selon l'une quelconque des revendications précédentes, caractérisée en ce que sa couche externe (21, 31) est en des matériaux totalement différents ou en des matériaux d'une même famille mais à caractéristiques différentes, de sorte qu'elle présente, entre ses deux extrémités et séquentiellement adjacentes les unes aux autres, des parties de rigidité et/ou souplesse différentes, y compris en l'absence de soufflet.

8. Conduite de fluide selon l'une quelconque des revendications précédentes, caractérisée en ce qu'elle est réalisée par les techniques d'extrusion-soufflage ou d'extrusion-aspiration.

9. Conduite de fluide selon l'une quelconque des revendications précédentes, caractérisée en ce que son axe moyen est courbé dans les deux (2D) ou trois dimensions de l'espace (3D), en ce qu'elle présente un diamètre compris entre 10 et 80 mm, une épaisseur comprise entre 0,5 et 5 mm et en ce que sa longueur développée sous pression peut atteindre 2 m, avec un nombre de coudes qui peut être de l'ordre de six.

10. Utilisation d'une conduite de fluide selon l'une quelconque des revendications précédentes en tant que canalisation, tube, tuyau, raccord ou tubulure d'acheminement de fluide agressif, comme le liquide caloporteur de refroidissement d'un moteur thermique, le carburant d'un tel moteur ou les mélanges air et vapeurs de carburant, etc ...
